(19) Europäisches Patentamt
European Patent Office
Office européen des brevets

(11) **EP 0 556 135 B1**

(12) **FASCICULE DE BREVET EUROPEEN**

(45) Date de publication et mention
de la délivrance du brevet:
**21.05.1997 Bulletin 1997/21**

(51) Int. Cl.⁶: **C01G 43/06**

(21) Numéro de dépôt: **93420056.9**

(22) Date de dépôt: **09.02.1993**

(54) **Procédé de récupération et d'épuration d'alliage métallique à base d'uranium très enrichi**

Verfahren zur Rückgewinnung und Reinigung von einer sehr angereichertes Uran enthaltenden Metallegierung

Process for the recovery and purification of very enriched uranium based metal alloy

(84) Etats contractants désignés:
**DE FR GB**

(30) Priorité: **11.02.1992 FR 9201730**
**05.06.1992 FR 9207157**

(43) Date de publication de la demande:
**18.08.1993 Bulletin 1993/33**

(73) Titulaire: **COGEMA COMPAGNIE GENERALE DES MATIERES NUCLEAIRES**
**F-78141 Velizy-Villacoublay (FR)**

(72) Inventeurs:
• **Gabriac, André**
**F-26700 La Garde Adhemar (FR)**
• **Lamaze, Airy-Pierre**
**F-38000 Grenoble (FR)**
• **Durand, Roger**
**F-78110 Le Vesinet (FR)**
• **Romano, René**
**F-75116 Paris (FR)**

(74) Mandataire: **Dubois-Chabert, Guy et al**
**c/o BREVATOME**
**25, rue de Ponthieu**
**75008 Paris (FR)**

(56) Documents cités:
FR-A- 1 272 542          FR-A- 1 333 814
FR-A- 2 003 589          FR-A- 2 068 738
GB-A- 1 198 454          US-A- 2 750 253

**Description**

## DOMAINE TECHNIQUE

L'invention concerne un procédé de traitement d'alliage métallique à base d'uranium très enrichi pour en récupérer l'uranium sous forme d'un composé uranifère pur à plus faible teneur isotopique contrôlée, par le moyen d'une voie sèche fluorure.

## PROBLEME POSE

Il existe des disponibilités d'alliages métalliques à base d'uranium très enrichi en U235 et contenant généralement des pourcentages significatifs d'éléments d'addition du type Mo, Nb, Fe, Cr, Ni, Si, Al, Zr, Ta, W... Par très enrichi, on comprend des rapports (U235/U total) généralement supérieurs à 8%, mais pouvant atteindre, voire dépasser 90%. Il peut s'agir par exemple d'alliages U-Si provenant de réacteurs de recherche du type MTR enrichis au plus à 20%, d'alliages U-Al, d'alliages à usage militaire, etc... Ces alliages peuvent être non irradiés (par exemple rebuts, alliages déclassés...) ou irradiés.

Il est intéressant de pouvoir récupérer le potentiel en U235 contenu dans ces disponibilités pour l'utiliser par exemple sous forme moins enrichie et purifiée comme combustible dans des réacteurs nucléaires de puissance, par exemple du type PWR, BWR ... ou des réacteurs de recherche.

Pour cela, la demanderesse a recherché un procédé de traitement de ces alliages métalliques permettant d'obtenir un composé uranifère pur ayant une teneur isotopique homogène en U235, adaptée à la nouvelle utilisation et différente de celle du produit de départ, de même qu'une composition chimique et une qualité telles qu'on puisse l'utiliser de manière simple à la confection du combustible désiré dans des installations existantes prévues pour cet usage. Le composé chimique doit en particulier avoir une grande pureté et une homogénéité parfaite.

Le document FR-A-1 272 542 décrit un procédé de récupération d'uranium dans un alliage uranium/molybdène. Dans ce procédé, l'attaque de l'alliage se fait par un mélange d'oxygène et d'acide chlorhydrique ou d'oxygène et d'acide fluorhydrique, suivie de la volatilisation du molybdène sous forme d'oxychlorure ou d'oxyfluorure de molybdène pour le séparer de l'uranium.

## DESCRIPTION DE L'INVENTION

L'invention est un procédé de traitement d'alliage métallique à base d'uranium de préférence très enrichi en U235 et d'autres éléments métalliques comprenant :

a) un traitement de fluoration direct de l'alliage sous forme massive ou divisée par au moins un gaz fluoré ne comprenant pas d'oxygène pour récupérer d'une part un mélange gazeux contenant l'uranium et d'autres éléments de l'alliage sous forme de fluorures gazeux pouvant contenir des oxyfluorures en cas de présence d'oxygène dans l'alliage de départ avec des gaz incondensables, d'autre part un résidu solide imbrûlé ou fluoré non volatil,

b) un traitement de distillation dudit mélange gazeux pour récupérer séparément de l'hexafluorure d'uranium pur, des fluorures des autres éléments,

c) une opération de mélange dudit hexafluorure d'uranium très enrichi et pur sous forme liquide ou gazeuse avec un hexafluorure d'uranium moins enrichi dans des proportions telles que l'on obtienne la teneur isotopique en U235 différente dans le mélange résultant et à la valeur souhaitée.

L'alliage métallique de départ contient en général de fortes proportions d'éléments d'alliage comme Mo, Nb, Fe, Cr, Ni, Si, Al, Zr, Ta, W, voire Pu, etc... Sa fluoration est effectuée sous forme massive ou divisée, cette division pouvant être obtenue à partir de lingots ou morceaux massifs par tous moyens connus de l'homme de l'art, par exemple sciage, broyage, broyage cryogénique, etc... adaptés matériellement à la gestion de la criticité.

La fluoration peut se faire en une ou deux étapes :

- en une étape : à l'aide de fluor gazeux ; la réaction exothermique est contrôlée par introduction d'un gaz inerte de dilution généralement incondensable (par exemple azote, argon, ...). On obtient d'une part un mélange gazeux contenant des gaz incondensables (principalement le gaz inerte de dilution), des fluorures gazeux et éventuellement des oxyfluorures (d'uranium très enrichi et des éléments de l'alliage donnant des fluorures volatils à la température de la réaction de fluoruration), d'autre part un résidu solide, constitué d'impuretés sous forme d'imbrûlés et de fluorures non volatils, qui est éventuellement traité avant rejet.

- en deux étapes : une première étape dans laquelle l'uranium est transformé en $UF_4$ et une partie des éléments métalliques de l'alliage de départ en fluorure à l'aide d'un composé gazeux, et non polluant, du fluor, et une deuxième étape où la fluoration du solide obtenu lors de la 1ère étape est complétée à l'aide d'un gaz à base de fluor dans des conditions analogues à celles de la fluoration en une étape.

La fluoration en deux étapes peut être réalisée selon deux modes:

- dans un premier mode de réalisation, la première étape est effectuée en mettant en contact l'alliage de départ avec de l'acide fluorhydrique anhydre gazeux pour obtenir des fluorures volatils, qui sont à éliminer après séparation (par exemple par filtration), condensation et/ou traitement de neutralisation et un résidu solide composé principalement de fluorures solides (dont tout l'U sous forme $UF_4$), et une deuxième étape où ledit résidu solide est traité par du fluor gazeux dans des conditions analogues à celles de la fluoration en une étape, comme cela a déjà été dit.

- dans un deuxième mode de réalisation, la première étape est effectuée en mettant en contact l'alliage uranifère de départ avec un gaz fluoré à base d'$UF_6$, généralement plus appauvri en U235, pour transformer tout ou partie de l'U en $UF_4$ et fluorer au moins partiellement les autres constituants métalliques de l'alliage de départ. Dans la deuxième étape, le solide obtenu précédemment est mis en contact avec du fluor, éventuellement dilué par un gaz inerte, pour obtenir, comme cela a été déjà vu dans la fluoration en une étape, d'une part le mélange de fluorure gazeux et de gaz incondensables, d'autre part le résidu de non volatils et d'imbrûlés.

L'U est transformé selon les réactions :

$$U(solide) + 2\ UF_6\ (gazeux) \rightarrow 3\ UF_4\ (solide)$$

$$3\ UF_4\ (solide) + F_2\ (gazeux) \rightarrow 3\ UF_6\ (gazeux)$$

Dans ce deuxième mode, on peut opérer dans un seul réacteur fonctionnant à contre-courant. Ainsi à une extrémité du réacteur, on introduit l'alliage métallique de préférence en morceaux, à une section intermédiaire du réacteur l'$UF_6$ gazeux plus appauvri et à l'autre extrémité le gaz à base de fluor, le mélange de fluorures gazeux et de gaz incondensables étant évacué à l'extrémité d'introduction de l'alliage métallique.

Ce deuxième mode présente plusieurs avantages :

. la fluoration se faisant en deux temps avec l'obtention intermédiaire d'$UF_4$ à l'aide de fluor combiné ($UF_6$), le contrôle de la température de réaction est grandement facilité et amélioré; un avantage analogue est obtenu également avec le premier mode où on utilise HF.

. le fait d'effectuer, dès ce stade du procédé, un mélange isotopique destiné à abaisser la teneur isotopique de l'U permet de limiter les problèmes de criticité dans la suite du procédé et donc de simplifier considérablement les problèmes relatifs au dimensionnement et à la réglementation des installations.

Le flux gazeux issu du traitement par le fluor est généralement filtré et condensé pour être amené généralement à l'état liquide et stocké dans une capacité intermédiaire où l'état liquide est généralement maintenu. Au cours de cette condensation, les gaz incondensables sont séparés.

La condensation peut être effectuée par le froid dans un ou plusieurs cristallisoirs sucessifs maintenus sous des pressions d'environ 1 bar et à des températures très basses habituellement d'environ -25°C, afin d'éliminer toute trace de fluorure d'U dans les gaz incondensables. Ces gaz sont constitués principalement par un mélange de fluor excédentaire, de gaz de dilution (azote, argon ...) ou de fluorures incondensables (par exemple $SiF_4$); ils peuvent alors être rejetés après un éventuel passage dans une colonne d'abattage et/ou un filtre de sécurité; mais ils peuvent être également recyclés à l'étape de fluoration, dans la mesure où ils ne contiennent pas de fluorures gazeux incondensables, ce qui permet dans ce cas de moins pousser la cristallisation et le traitement desdits gaz.

Le traitement de purification par distillation du mélange de fluorures stocké dans la capacité intermédiaire est effectué dans une ou plusieurs colonnes à distiller successives, selon la complexité du mélange à traiter.

Ces colonnes sont en général à garnissage, mais elles peuvent être à plateaux. Elles sont habituellement équipées d'un condenseur à reflux situé en tête de colonne, et d'un rebouilleur situé en pied de colonne, le mélange de fluorure à traiter étant introduit, généralement à l'état liquide, à un niveau intermédiaire.

Par exemple, une seule colonne peut suffire quand on est en présence d'un mélange binaire d'$UF_6$ et d'un seul autre fluorure d'impureté. Dans ce cas en réglant les taux de reflux du condenseur et du rebouillage, on peut obtenir de l'$UF_6$ pur soit en tête soit en pied de colonne selon que l'autre fluorure est respectivement moins volatil (plus lourd) ou plus volatil (plus léger) que l'$UF_6$.

Par contre, quand on est en présence d'un mélange complexe contenant outre $UF_6$ un mélange complexe de fluorures d'impuretés volatils, il est avantageux d'opérer avec plusieurs colonnes successives. Dans une première colonne, on cherche par exemple à récupérer tout l'$UF_6$ en tête de colonne, où il se trouve mélangé avec d'autres fluorures plus légers que lui, cet $UF_6$ étant alors séparé des fluorures plus lourds que lui récupérés en pied de colonne.

Dans la deuxième colonne, on introduit alors ledit mélange d'$UF_6$ avec les fluorures légers et on récupère $UF_6$ pur en pied de colonne en éliminant les fluorures plus légers en tête de colonne.

L'ordre de déroulement de ces deux opérations de distillation peut être inversé.

Dans chaque colonne, on règle les taux de reflux du condenseur et du rebouillage pour arriver au résultat de pureté recherché.

Par ailleurs, on voit que l'on peut utiliser des colonnes supplémentaires pour séparer les uns des autres des fluorures métalliques qu'il serait intéressant de valoriser.

Après le traitement de distillation, on a ainsi obtenu

séparément UF$_6$ pur et les différents autres fluorures sous forme liquide. En tête des condenseurs, on a également séparé et récupéré des gaz incondensables aux températures des têtes de colonnes en faible quantité qui sont en général rejetés après traitement, mais qui peuvent être recyclés si leur composition s'y prête.

Lesdits autres fluorures (autres que UF$_6$), une fois solidifiés, peuvent être stockés tels quels, mais sont de préférence traités, généralement hydrolysés pour obtenir d'une part HF, qui peut alors être valorisé, et d'autre part les métaux de l'alliage uranifère initial sous forme d'oxydes plus aisément stockables, manipulables et valorisables, lesdits oxydes pouvant ensuite être réduits par l'hydrogène si on souhaite obtenir les métaux de l'alliage uranifère.

L'UF$_6$ pur obtenu après le traitement de purification se trouve sous forme liquide; on peut alors le mélanger, sous cette forme ou sous forme gazeuse, à un flux dosé d'UF$_6$ pur (en général plus appauvri en U235), sous forme gazeuse ou liquide, pour obtenir la teneur isotopique souhaitée en U235. Evidemment, le flux dosé est fonction des teneurs respectives en U235 des UF$_6$ à mélanger et de la teneur à obtenir.

L'UF$_6$ plus appauvri peut être avantageusement à base d'uranium très appauvri (0,2% en U235) dont il existe des stocks importants, ou à base d'uranium appauvri ou naturel.

Le mélange effectué à partir des UF$_6$ sous forme liquide ou gazeuse présente l'avantage de la simplicité et de donner un UF$_6$ résultant possèdant une homogénéité, tant isotopique que chimique, parfaite.

Après mélange l'UF$_6$ résultant, pur et à la teneur isotopique souhaitée, est condensé, coulé en conteneur en vue de son transport, stockage ou utilisation, comme habituellement.

DESSINS

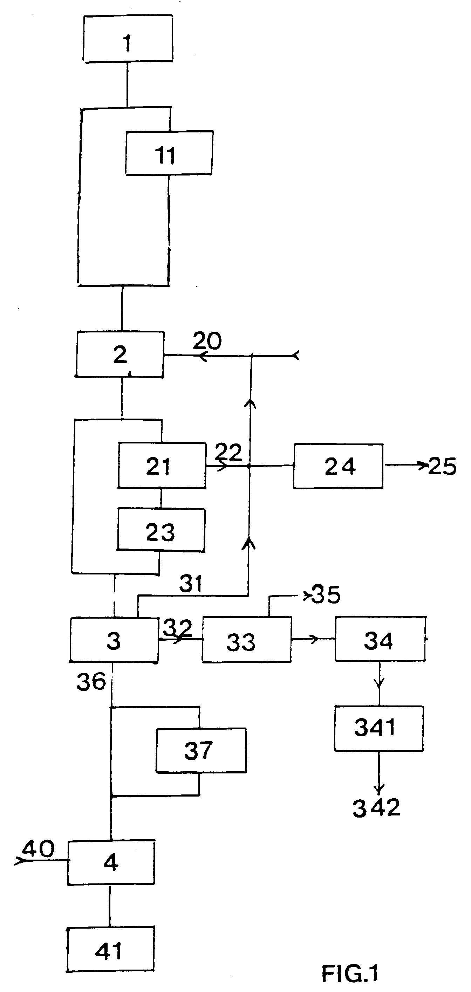

La figure 1 représente les différentes étapes du procédé avec les principales variantes facultatives :

(1) représente l'alliage sous forme massive ;

(11) représente la réduction sous forme divisée de l'alliage ;

(2) représente la fluoration de l'alliage sous forme massive ou divisée, ou de l'oxyde, à l'aide d'un gaz (20) contenant du fluor et généralement des gaz inertes incondensables ; comme cela a été vu plus haut, cette fluoration peut être effectuée en deux étapes avec obtention d'un UF$_4$ intermédiaire à l'aide de fluor combiné (HF ou UF$_6$) ;
(21) représente la condensation des fluorures volatils obtenus en (2), avec départ des gaz incondensables (22) éventuellement au moins partiellement recyclés en (20) et/ou traités en (24), par exemple par filtration et/ou lavage, avant rejet (25);
(23) représente le réchauffage des fluorures condensés en (21);

(3) représente la distillation fractionnée, permettant de purifier UF$_6$, effectuée en une ou plusieurs colonnes;

(31) représente le départ d'éventuels gaz incondensables, s'ils n'ont pas été séparés auparavant, qui peuvent être comme précédemment recyclés en (20) et/ou traités en (24) avant rejet (25);
(32) représente les sorties multiples séparées des différents fluorures des éléments de l'alliage autres que l'uranium; ils peuvent être traités en (33), généralement par hydrolyse pour obtenir les éléments sous forme d'oxyde en (34) et de l'acide fluorhydrique en (35), puis réduits par l'hydrogène (en 341) pour obtenir les métaux de l'alliage (342);
(36) représente la sortie d'UF$_6$ pur en général sous forme liquide;
(37) représente le réchauffage de l'UF$_6$ pour le mettre sous forme gazeuse;

(4) représente l'opération de mélange de l'UF$_6$ pur sous forme liquide ou gazeuse avec un UF$_6$ plus appauvri (40) sous forme liquide ou gazeuse en quantité dosée;

(41) représente la condensation et la coulée en conteneur de l'UF$_6$ final à la teneur isotopique souhaitée.

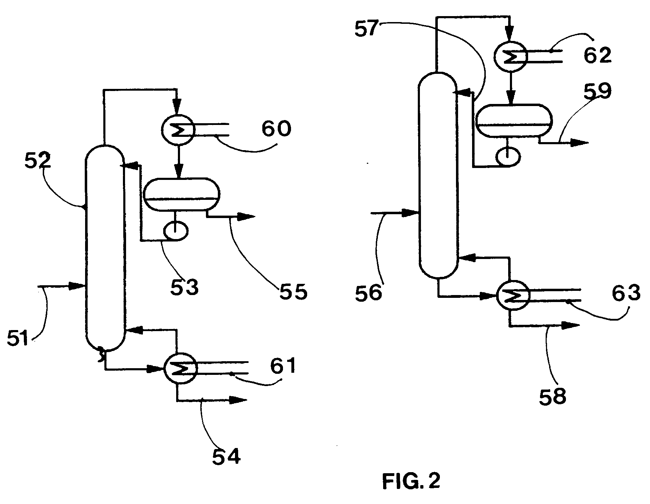

La figure 2 représente la distillation fractionnée (repère 3 de la fig. 1) composée de 2 colonnes successives et qui est utilisée dans l'Exemple 1.

EXEMPLES

Pour illustrer l'invention, les exemples suivants ont été réalisés, à partir d'alliages d'uranium naturel en ce qui concerne les Exemples 1 et 2 (mais ces derniers sont transposables dans les mêmes conditions à de l'U enrichi) et à partir d'alliage d'uranium très enrichi dans le cas de l'Exemple 3.

Exemple 1

On a utilisé comme produit de départ un lot de fragments d'alliages d'analyse moyenne : 5% de Nb, 5% de Mo, 1 % de Ti, 1 % de Fe, 0,1 % de Ni, le solde étant de l'uranium naturel à 0,7% d'U235. Il a été broyé de façon à obtenir une granulométrie comprise entre 1,5 et 25 mm.
Il a été fluoré en continu dans un réacteur en Monel de diamètre extérieur 88,9 mm, d'épaisseur 3,05 mm muni d'un système de refroidissement par fluide thermostatique. Le débit de fluor était de 455 g/h sous une pression absolue de 1,2 bar additionné temporairement de N$_2$

pour maintenir la température de paroi du réacteur à 320 ± 30°C.

Dans ces conditions, le débit d'azote a varié entre 0 et 100%, principalement entre 40 et 70% du débit total.

Les fluorures gazeux résultants ont été intégralement recueillis dans un cristallisoir sous une pression absolue de 0,5 ± 0,1 bar, refroidi à -25°C à l'aide de fréon 113, pour obtenir un mélange de fluorures sous forme cristalline. Les gaz incondensables séparés ont été lavés et neutralisés par une solution alcaline de KOH.

Le mélange de fluorures cristallisés contient la totalité de l'uranium, du molybdène et du niobium respectivement sous forme de $UF_6$, $MoF_6$, $NbF_5$, ainsi que des traces de $TiF_4$.

On a recueilli sous forme de fluorures au pied du réacteur de fluoration l'intégralité du fer et du nickel et 95% du titane.

Le bilan matière met en évidence les rendements suivants:

Rendement : U récupéré sous forme de $UF_6$ cristallisé / U de l'alliage de départ pratiquement égal à 100%

Rendement : fluor contenu dans les fluorures solides ou cristallisés / fluor engagé en réaction égal à 95%.

Après stockage intermédiaire dans une capacité tampon, les fluorures cristallisés ont été fondus pour les introduire en continu dans le cycle de distillation composé de deux colonnes successives.

Ils ont été introduits sous 3,3 bars absolus au 1/3 inférieur d'une colonne à garnissage en Monel (diamètre : 55 mm, hauteur : 1200 mm), à un débit continu de 4,977 kg/h, soit 1,3 l/h, pour une composition moyenne de (51) :

    4,300 kg/h de $UF_6$ contenus
    0,352 kg/h de $MoF_6$ contenus
    0,325 kg/h de $NBF_5$ contenus
    Trace de $TiF_4$.

L'équilibre de température a été maintenu à 92°C en milieu de colonne (52), pour un débit de reflux (53) de 8l/h et un débit de soutirage en pied (54) de 0,19 l/h, (60) et (62) représentant des serpentins de refroidissement, (61) et (63) des serpentins de chauffage.

On a recueilli en tête de colonne sous 3,2 bars le mélange suivant (55) :

| | |
|---|---|
| $UF_6$ | : 4,077 kg/h |
| $MoF_6$ | : 0,352 kg/h |

et en pied de colonne un mélange contenant :

| | |
|---|---|
| $NbF_5$ | : 0,325 kg/h |
| $UF_6$ | : 0,223 kg/h |
| $TiF_4$ | : traces. |

Le mélange de tête (55), qui peut être retraité cycliquement par distillation adaptée pour séparer Nb et U, a été introduit au 1/3 inférieur (56) de la 2ème colonne de même type (diamètre : 40 mm, hauteur 2400 mm) sous 3,2 bars absolus, à 87°C.

Les débits de reflux et de soutirage ont été respectivement :

- reflux (57) : 34 l/h
- soutirage en pied (58) : 1,14 l/h soit $UF_6$ : 4,069 kg/h
- soutirage au condenseur de tête (59) : 0,12 l/h

| | |
|---|---|
| soit $MoF_6$ | : 0,3532 kg/h |
| $UF_6$ | : 0,002 kg/h; |

L'$UF_6$ de pied de colonne a été recueilli en conteneur de 25 kg. Son analyse moyenne a été la suivante en pourcentage en poids ramené à l'uranium :

    Mo < 1 ppm
    Nb < 1 ppm
    Fe < 0,5 ppm
    Ti < 0,5 ppm
    Ni < 0,5 ppm.

On a alors additionné à ces 25 kg à l'état liquide à 75°C, 6,25 kg d'$UF_6$ pur contenant 0,25% d'U235, préchauffés dans un récipient également à 75°C. Le mélange obtenu de 31,25 kg a une teneur isotopique de 0,61% en U235 et est parfaitement homogène.

Exemple 2

Cet exemple illustre la fluoration en deux étapes à l'aide d'un composé fluoré ($UF_6$) d'un alliage de départ du type $U_3Si_2$.

L'alliage de départ $U_3Si_2$ se présente sous forme d'une poudre de granulométrie inférieure à 150 µm et a la composition pondérale suivante:

    U 92,6% Si 7,3% A l0,1%.

Cette poudre représente ce qui peut être obtenu à partir d'un combustible de recherche à base de $U_3Si_2$ contenu à l'origine dans une matrice d'Al, celle-ci ayant été préalablement éliminée par attaque basique ou tout autre procédé équivalent.

Comme dans l'exemple précédent, on a opéré pour des raisons pratiques avec de l'U naturel (0,7% en U235).

On a opéré dans un réacteur de fluoration identique à celui de l'exemple 1; cependant, compte tenu de l'état de division de la poudre, il a été utilisé un système d'alimentation de ladite poudre protégé par un balayage d'argon.

On a introduit :

- en tête du réacteur 770 g/h d'alliage pulvérulent
- en milieu du réacteur 2112 g/h d'$UF_6$ très appauvri (0,3% en U235)

- en pied de réacteur 516 g/h de fluor à teneur en HF < 100 ppm plus ou moins dilué par Ar pour contrôler la température.

Les conditions de pression et de températures maintenues dans le réacteur ont été identiques à celles de l'Exemple 1. On a récupéré en tête de réacteur un mélange gazeux contenant :

22 g/h de fluor et de l'argon de dilution
3168 g/h d'$UF_6$ de teneur isotopique 0,43% en U235
208 g/h de $SiF_4$.

On a récupéré également des imbrûlés solides constitués d'$AlF_3$.

Le flux gazeux a été refroidi à -25°C; on a ainsi condensé la totalité de l'$UF_6$ et obtenu des gaz d'évent contenant le fluor excédentaire et la totalité de $SiF_4$ (208 g/h).

Un simple dégazage de l'$UF_6$ cristallisé, sous pression réduite en maintenant un palier de température, a permis ensuite d'obtenir un $UF_6$ contenant moins de 1 ppm de Si et de moins de 20 ppm d'HF.

Exemple 3

On a utilisé comme produit de départ un lot de fragments d'alliage de combustible irradié de type $U_3Si_2$ à base d'uranium moyennement enrichi (à 20% U235) contenu dans une matrice d'aluminium.

Le produit de départ avait été déchiqueté et broyé de façon à obtenir une granulométrie comprise entre 5 et 25 mm.

La composition du produit était sensiblement la suivante (en poids)

| | |
|---|---|
| Uranium : | 80% |
| Silicium : | 3% |
| Produit de fission (PF) | 7% |
| Aluminium : | 10% |

les PF les plus importants étant Pu,Mo,Nb,Ti,Ru et Mg.

Le produit a d'abord été traité en continu dans un réacteur en monel de diamètre intérieur 80 mm par un courant de HF gazeux de 450 g/h dilué par un débit continu de 500 g/h de $N_2$. La température était maintenue à 400°C et la pression du réacteur à $10^2$ KPa.

Les fluorures volatils résultants ont été filtrés; les fluorures non volatils, dont $UF_4$, restant dans le réacteur ont été ensuite fluorés en continu à 350°C sous une pression de $10^2$ KPa. Le débit de fluor était de 150 g/h dilué par un débit de 500 g/h de $N_2$.

Les fluorures volatils ont été filtrés sur une colonne à garnissage métallique qui a permis d'éliminer les fluorures non volatils entraînés et également le Pu sous forme de $PuF_4$ solide suite à la décomposition de $PuF_6$ gazeux instable. Ils ont été ensuite refroidis dans un condenseur maintenu à -20°C dans lequel $UF_6$ a été

cristallisé. La pression était de $10^2$ KPa.

Les gaz incondensables, principalement $F_2,O_2,N_2$ ont été filtrés et traités sur un absorbeur à chaux.

Après dégazage sous vide de quelques heures, le condenseur a été réchauffé à 90°C et l'$UF_6$ liquide a été soumis à deux distillations successives.

Dans la première colonne, on a récupéré en pied de colonne les lourds comme $NbF_5$ et les traces éventuelles de $PuF_6$. Dans la deuxième colonne, on a récupéré en tête essentiellement quelques dizaines de grammes de $MoF_6$ et en pied de l'$UF_6$ pur.

L'activité de l'$UF_6$ ainsi obtenu était inférieure à $2x10^{-7}$ $\mu$Ci/g d'U, et la teneur en impuretés métalliques banales < 50 ppm dont Mo < 1 ppm.

On a introduit ensuite cet $UF_6$ gazeux, par barbottage à raison de 14,5%, dans un conteneur d'$UF_6$ naturel pour obtenir un $UF_6$ enrichi à 3,5% d'U235, parfaitement homogène, destiné à l'obtention de combustible selon les procédés connus.

Le procédé selon l'invention conduit ainsi à un $UF_6$ final pur très homogène, notamment en ce qui concerne la teneur en U235; il permet de récupérer les impuretés contenues dans l'alliage initial, sous forme condensée et ne génère ainsi aucun effluent liquide contenant en particulier lesdites impuretés sous forme diluée, effluent qui serait à traiter avant rejet. Il permet également de limiter les problèmes de criticité compte tenu de l'absence de phase aqueuse.

**Revendications**

1.  Procédé de traitement d'alliage métallique à base d'uranium de préférence très enrichi en U235 et d'autres éléments métalliques comprenant :

    a) un traitement de fluoration direct de l'alliage, sous forme massive ou divisée, par au moins un gaz fluoré ne comprenant pas d'oxygène pour récupérer d'une part un mélange gazeux contenant l'uranium et d'autres éléments de l'alliage sous forme de fluorures gazeux pouvant contenir des oxyfluorures en cas de présence d'oxygène dans l'alliage de départ avec des gaz incondensables, d'autre part un résidu solide imbrûlé ou fluoré non volatil,

    b) un traitement de distillation dudit mélange gazeux pour récupérer séparément de l'hexafluorure d'uranium pur, des fluorures des autres éléments,

    c) une opération de mélange dudit hexafluorure d'uranium très enrichi et pur sous forme liquide ou gazeuse avec un hexafluorure d'uranium moins enrichi dans des proportions telles que l'on obtienne la teneur isotopique souhaitée dans le mélange résultant.

2.  Procédé selon la revendication 1, caractérisé en ce que l'alliage métallique est sous forme divisée.

3. Procédé selon l'une quelconque des revendications 1 et 2, caractérisé en ce que la distillation est précédée d'une étape comprenant la condensation des fluorures gazeux, la séparation subséquente des gaz incondensables et la remise sous forme liquide ou gazeuse des fluorures.

4. Procédé selon l'une quelconque des revendications 1 à 3, caractérisé en ce que la fluoration est effectuée en une étape à l'aide de fluor gazeux dilué par un gaz inerte.

5. Procédé selon l'une quelconque des revendications 1 à 3, caractérisé en ce que la fluoration est effectuée en deux étapes, une première étape où l'alliage est traité à l'aide d'un composé gazeux du fluor pour obtenir un solide contenant l'uranium sous forme $UF_4$ et une deuxième étape où ledit solide est traité par un gaz a base de fluor.

6. Procédé selon la revendication 5, caractérisé en ce que le composé gazeux du fluor est HF anhydre gazeux.

7. Procédé selon la revendication 5, caractérisé en ce que le composé gazeux du fluor est $UF_6$ gazeux, de préférence plus appauvri en U235 que l'U de l'alliage de départ.

8. Procédé selon l'une quelconque des revendications 1 à 7, caractérisé en ce que le traitement de distillation est effectué à l'aide d'au moins une colonne à distiller, et de préférence deux, comportant un condenseur et un bouilleur à reflux respectivement branché en tête et en pied de ladite (ou desdites) colonnes.

9. Procédé selon l'une quelconque des revendications 1 à 8, caractérisé en ce que les gaz incondensables séparés des fluorures condensés sont recyclés à l'étape de fluoration.

10. Procédé selon l'une quelconque des revendications 1 à 9, caractérisé en ce que les fluorures des autres éléments métalliques obtenus à l'étape (b) sont séparés les uns des autres par distillation.

11. Procédé selon l'une quelconque des revendications 1 à 10, caractérisé en ce que les fluorures des autres éléments métalliques obtenus à l'étape (b), séparés ou non les uns des autres, sont traités pour être transformés en oxyde puis en métal.

**Claims**

1. Process for the treatment of a uranium-based metal alloy, preferably highly enriched with U235 and other metallic elements comprising:

a) a fluorination treatment of the alloy by at least one fluorine-containing gas in order to recover on the one hand a gaseous mixture containing the uranium and other elements of the alloy in the form of gaseous fluorides which may contain oxyfluorides if oxygen is present in the starting alloy with non-condensable gases, and on the other hand a non-volatile, fluoric or unburned solid residue,
b) a distillation treatment of said gaseous mixture in order to separately recover the pure uranium hexafluoride from the fluorides of the other elements,
c) an operation of mixing said highly enriched, pure uranium hexafluoride in liquid or gaseous form with a less enriched uranium hexafluoride in proportions such that the desired isotopic content is obtained in the resulting mixture.

2. Process according to claim 1, characterized in that the metal alloy is brought into divided form before fluorination.

3. Process according to either of the claims 1 and 2, characterized in that the distillation is preceded by a stage including the condensation of the gaseous fluoride, the subsequent separation of the non-condensable gases and the restoring to liquid or gaseous form of the fluorides.

4. Process according to any one of the claims 1 to 3, characterized in that fluorination takes place in one stage with the aid of gaseous fluorine diluted by an inert gas.

5. Process according to any one of the claims 1 to 3, characterized in that fluorination is performed in two stages, a first stage where the alloy is treated with the aid of combined fluorine to obtain a solid containing uranium in $UF_4$ form and a second stage where said solid is treated by a fluorine-based gas.

6. Process according to claim 5, characterized in that during the first stage the alloy is treated by gaseous anhydrous HF.

7. Process according to claim 5, characterized in that during the first stage the alloy is treated by gaseous $UF_6$, preferably more depleted of U235 than the U of the starting alloy.

8. Process according to any one of the claims 1 to 7, characterized in tht the distillation treatment is carried out with the aid of at least one and preferably two distillation columns, incorporating a condenser and a reflux reboiler respectively connected to the top and bottom of said column or columns.

9. Process according to any one of the claims 1 to 8, characterized in that the non-condensable gases separated from the condensed fluorides are recycled to the fluorination stage.

10. Process according to any one of the claims 1 to 9, characterized in that the fluorides of the other metallic elements obtained in stage (b) are separated from one another by distillation.

11. Process according to any one of the claims 1 to 10, characterized in that the fluorides of the other metallic elements obtained in stage (b), which may or may not be separated from one another, are treated for transformation into oxide and then into metal.

**Patentansprüche**

1. Verfahren zur Behandlung einer metallischen Legierung auf der Basis von Uran, vorzugsweise hochangereichert an U-235, und anderen metallischen Elementen, umfassend:

    a) eine Behandlung zur direkten Fluorierung der Legierung in kompakter oder zerteilter Form mit mindestens einem fluorhaltigen Gas, das keinen Sauerstoff enthält, um einerseits eine gasförmige Mischung mit nichtkondensierbaren Gasen, die das Uran und andere Elemente der Legierung in Form von gasförmigen Fluoriden enthält und im Fall der Anwesenheit von Sauerstoff in der Ausgangslegierung Oxyfluoride enthalten kann, andererseits einen nichtflüchtigen festen, unverbrannten oder fluorierten Rückstand zu gewinnen,
    b) eine Destillationsbehandlung der genannten gasförmigen Mischung, um getrennt reines Uranhexafluorid und Fluoride der anderen Elemente zu gewinnen,
    c) eine Operation der Mischung des genannten hochangereicherten und reinen Uranhexafluorids in flüssiger oder gasförmiger Form mit einem weniger angereicherten Uranhexafluorid in solchen Verhältnissen, daß man in der resultierenden Mischung den gewünschten Isotopengehalt erhält.

2. Verfahren nach Anspruch 1, dadurch gekennzeichnet, daß die metallische Legierung in zerteilter Form vorliegt.

3. Verfahren nach einem der Ansprüche 1 und 2, dadurch gekennzeichnet, daß der Destillation ein Schritt vorhergeht, der die Kondensation der gasförmigen Fluoride, die anschließende Abtrennung der nichtkondensierbaren Gase und die Rückführung der Fluoride in die flüssige oder gasförmige Form umfaßt.

4. Verfahren nach einem der Ansprüche 1 bis 3, dadurch gekennzeichnet, daß die Fluorierung in einem Schritt durchgeführt wird mit Hilfe von gasförmigem Fluor, das mit einem inerten Gas verdünnt ist.

5. Verfahren nach einem der Ansprüche 1 bis 3, dadurch gekennzeichnet, daß die Fluorierung in zwei Schritten durchgeführt wird, einem ersten Schritt, in dem die Legierung mit Hilfe einer gasförmigen Fluorverbindung behandelt wird, um einen Festkörper zu erhalten, der das Uran in Form von $UF_4$ enthält, und einem zweiten Schritt, in dem genannter Festkörper mit einem Gas auf Fluorbasis behandelt wird.

6. Verfahren nach Anspruch 5, dadurch gekennzeichnet, daß die gasförmige Fluorverbindung gasförmiges wasserfreies HF ist.

7. Verfahren nach Anspruch 5, dadurch gekennzeichnet, daß die gasförmige Fluorverbindung gasförmiges $UF_6$ ist, vorzugsweise stärker an U-235 verarmt als das U der Ausgangslegierung.

8. Verfahren nach einem der Ansprüche 1 bis 7, dadurch gekennzeichnet, daß die Destillationsbehandlung ausgeführt wird mit Hilfe mindestens einer, vorzugsweise mit zwei Destillationskolonnen, enthaltend einen Kühler und einen Rückflußkocher, die am Kopf bzw. am Fuß der genannten Kolonne(n) angeschlossen sind.

9. Verfahren nach einem der Ansprüche 1 bis 8, dadurch gekennzeichnet, daß die von den kondensierten Fluoriden abgetrennten nichtkondensierbaren Gase bei dem Fluorierungsschritt wiederverwendet werden.

10. Verfahren nach einem der Ansprüche 1 bis 9, dadurch gekennzeichnet, daß die im Schritt (b) erhaltenen Fluoride der anderen metallischen Elemente durch Destillation voneinander getrennt werden.

11. Verfahren nach einem der Ansprüche 1 bis 10, dadurch gekennzeichnet, daß die im Schritt (b) erhaltenen Fluoride der anderen metallischen Elemente, voneinander getrennt oder nicht, zur Überführung in Oxid und dann in Metall aufbereitet werden.

FIG.1

**FIG. 2**